(19) **Europäisches Patentamt**

**European Patent Office**

**Office européen des brevets**

(11) **EP 0 540 383 B1**

(12) **FASCICULE DE BREVET EUROPEEN**

(45) Date de publication et mention
de la délivrance du brevet:
**28.06.2000 Bulletin 2000/26**

(51) Int. Cl.$^7$: **G06F 9/46**

(21) Numéro de dépôt: **92402784.0**

(22) Date de dépôt: **12.10.1992**

(54) **Système multiprocesseur avec moyens microprogrammés pour la répartition des processus aux processeurs**

Mehrprozessorsystem mit mikroprogrammierten Mitteln für die Verteilung von Prozessen auf Prozessoren

Multiprocessor system with microprogrammed means for partitioning the processes between the processors

(84) Etats contractants désignés:
**DE FR GB IT**

(30) Priorité: **30.10.1991 FR 9113431**

(43) Date de publication de la demande:
**05.05.1993 Bulletin 1993/18**

(73) Titulaire: **BULL S.A.**
**78430 Louveciennes (FR)**

(72) Inventeur: **Lecourtier, Georges**
**F-78000 Versailles (FR)**

(74) Mandataire: **Colombe, Michel et al**
**Direction de la Propriété Intellectuelle BULL SA**
**Poste courrier:LV 58F35**
**68 route de Versailles**
**78430 Louveciennes (FR)**

(56) Documents cités:
**EP-A- 0 064 142**          **US-A- 4 318 173**

• **SIXTH SYMPOSIUM ON RELIABILITY IN DISTRIBUTED SOFTWARE AND DATABASE SYSTEMS 17 Mars 1987, WILLIAMSBURG, VA, USA pages 32 - 42 K. SCHWAN ET AL 'Adaptive, Reliable Software for Distributed and Parallel Real-Time Systems'**
• **SIXTH SYMPOSIUM ON RELIABILITY IN DISTRIBUTED SOFTWARE AND DATABASE SYSTEMS 17 Mars 1987, WILLIAMSBURG, VA, USA pages 32 - 42 K. SCHWAN ET AL 'Adaptive, Reliable Software for Distributed and Parallel Real-Time Systems'**
• **IBM TECHNICAL DISCLOSURE BULLETIN. vol. 26, no. 6, Novembre 1983, NEW YORK US page 2821 R. L. ABRAHAM 'task scheduling on a multilevel multiprocessor'**

## Description

L'invention se situe dans le domaine des systèmes informatiques de type multiprocesseur et concerne plus particulièrement les mécanismes mis en oeuvre pour assurer de façon dynamique la répartition des processus aux processeurs d'un tel système.

La répartition des processus aux processeurs (habituellement appelée "dispatching") est une opération dont la mise en oeuvre conditionne de façon importante la performance du système, en particulier pour les applications de type transactionnel. L'influence du dispatching sur la performance est particulièrement sensible lorsque le nombre de processeurs du système devient important car la fréquence moyenne des événements susceptibles de déclencher un dispatching s'élève proportionnellement au nombre de processeurs.

Le dispatching est une opération qui est déclenchée par tout événement susceptible de provoquer une modification dans le choix des processus devant être exécutés. Ces événements résultent le plus souvent des opérations de synchronisation entre processus, les processus pouvant être ceux qui exécutent les programmes d'application ou les programmes du système d'exploitation tels que les programmes d'entrée-sortie. Il peut exister aussi d'autres types d'événements liés par exemple à un changement d'état d'un processeur ou à des instructions particulières qui introduisent ou retirent un processus du système ou qui modifient le niveau de priorité d'un des processus. L'apparition d'un tel événement aura alors pour effet d'activer des microprogrammes système chargés de déterminer la nouvelle attribution des processus aux processeurs en fonction de l'événement et de divers critères tenant compte par exemple de l'ordre de priorité des processus prêts à être exécutés.

Dans le cas d'une mise en oeuvre microprogrammée, le dispatching s'effectue en deux phases. Une première phase de sélection, correspondant à l'exécution d'un premier module microprogrammé appelé "SELECT", est prévue pour effectuer le choix des processus à exécuter et des processeurs qui doivent les exécuter. Cette phase de sélection s'accompagne d'envois d'interruptions servant à informer les processeurs concernés des nouveaux processus à exécuter. La réception de ces interruptions par les processeurs destinataires déclenche dans ceux-ci une phase d'exécution consistant essentiellement à sauvegarder les contextes des processus dont l'exécution est interrompue et à charger dans les processeurs les contextes des nouveaux processus à exécuter. Cette phase d'exécution correspond à l'exécution en parallèle par les processeurs concernés de modules microprogrammés appelés "EXEC".

Afin d'améliorer le temps de réponse du système aux événements déclenchant le dispatching, il est souhaitable que l'opération de sélection puisse être effectuée de façon décentralisée, ce qui implique que tout les processeurs du système, ou du moins plusieurs d'entre eux, soient capables d'effectuer chacun l'opération de sélection. Ce problème a fait l'objet du brevet américain US 4.590.555 délivré le 20 mai 1986, correspondant au brevet européen EP-B1 30 504 et concernant un dispositif de répartition des processus dans un système multiprocesseur, chaque processeur incluant un répartiteur de processus capable d'initier un processus plus prioritaire qu'un processus courant. Ce brevet traitait en particulier du problème lié aux conflits possibles entre plusieurs processeurs cherchant à exécuter chacun l'opération de sélection. Ces conflits doivent être absolument évités car l'opération de sélection manipule des données système, telles que l'état des processus et des processeurs, qui doivent conserver une valeur unique pour tout le système. Dans ce but, on prévoyait notamment des verrous, c'est-à-dire des moyens indicateurs activés et maintenus par le processeur exécutant un dispatching pour empêcher qu'un autre processeur effectue à nouveau une phase de sélection tant que le dispatching précédent n'est pas complètement terminé.

L'invention a pour but de proposer une réalisation optimisée du dispatching du type précédent de façon à ce que l'augmentation du nombre de processeurs n'entraîne pas une baisse relative des performances du système.

Cette recherche d'optimisation a conduit à effectuer l'analyse statistique des différents types de dispatching exécutés dans un système multiprocesseur. Pour les applications transactionnelles, cette analyse a permis de constater que dans environ 75 % des cas, les opérations de dispatching avaient finalement pour effet soit de n'apporter aucune modification dans le choix des processus exécutés, soit d'interrompre l'exécution d'un seul processus et généralement le remplacer par un autre. Ces cas fréquents de dispatching sont aussi a priori les plus simples à traiter mais encore faut-il trouver les moyens pour exploiter cet état de fait de façon à conserver en toutes circonstances la cohérence du système.

On distingue d'autre part deux catégories de ressources impliquées lors des opérations de sélection. La première catégorie regroupe les informations relatives à l'état des processus constitués dans le système et qui sont habituellement matérialisées par des files d'attente de processus. Il existe généralement des files d'attente de processus associées à des événements. Chaque file d'attente contient l'identité de tous les processus dont l'exécution a été interrompue dans l'attente de l'apparition d'un événement ou d'un message associé. Il existe d'autre part au moins une file d'attente regroupant les processus en cours d'exécution et les processus prêts à être exécutés, c'est-à-dire les processus qui ne peuvent pas être exécutés par manque de processeurs disponibles. Une deuxième catégorie de ressources comprend des moyens de dialogue permettant la communication entre les processeurs. Ces moyens sont généralement formés d'un mécanisme d'interruption associé à des zones d'échange de données, appelées boîtes aux lettres, permettant notamment au processeur qui exécute l'opération de sélection d'informer les processeurs destinataires des nouveaux processus à exécuter.

En analysant plus en détail les circonstances qui conduisent aux cas les plus fréquents de dispatching, on constate que très souvent seulement une partie des ressources évoquées ci-dessus est utilisée. En effet, si par exemple l'événement susceptible de déclencher un dispatching consiste en la notification par un processus en cours d'exécution d'un événement ou d'un message, deux cas peuvent se produire. Selon un premier cas, aucun processus n'est en attente de cet événement. Le processeur générateur de l'événement peut dans la pluplart des cas effectuer la mise à jour d'une structure de données du type sémaphore pour indiquer que l'événement s'est produit. Ce processeur pourra ensuite poursuivre l'exécution du processus qu'il exécutait auparavant et il n'y aura aucune modification dans la répartition des processus aux processeurs du système. Dans ce cas, seule la structure de données associée au sémaphore est impliquée. Dans l'autre cas, un processus au moins est en attente de cet événement. Le processus le plus prioritaire dans la file d'attente sera alors extrait de cette file d'attente et inséré dans la file d'attente des processus prêts et, en fonction du niveau de priorité de ce processus, il est possible qu'il devra remplacer un processus actif dans un des processeurs du système. Les ressources impliquées lors de cette opération seront donc la structure de données et la file d'attente des processus associés au sémaphore, la file d'attente des processus prêts ou actifs et éventuellement les moyens de dialogue entre processeurs si le processus qui était en attente doit remplacer un processus qui était actif dans un autre processeur.

Si on prend comme autre exemple le cas complémentaire où un processus actif doit s'enquérir si un événement est survenu ou si un message est présent pour pouvoir continuer son exécution, on distingue également deux cas. Selon un premier cas, l'événement ou le message a déjà été notifié, ce qui est vérifié par le processeur en accédant aux structures de données associées au sémaphore. Le processus peut donc continuer son exécution. Dans l'autre cas, l'événement ou le message n'a pas été notifié et l'exécution du processus doit être interrompue. Dans ce cas, le processus le plus prioritaire dans la file d'attente des processus prêts prendra la place du processus exécuté précédemment par le processeur. Concernant l'utilisation des ressources, on voit que dans le premier cas seule la structure de données associée au sémaphore est impliquée alors que dans le second cas, la file d'attente des processus prêts l'est aussi. Par contre, dans les deux cas, les moyens de dialogue ne sont pas utilisés.

Sur la base des quelques exemples précédents dans un contexte particulier, on constate plus généralement que l'on pourrait décomposer l'opération de répartition des processus aux processeurs en plusieurs opérations plus simples correspondant chacune à une catégorie d'événements ou de situations particulières qui impliquent en fait l'utilisation d'une partie seulement de l'ensemble des ressources susceptibles d'être impliquées dans une opération de dispatching.

Le but de l'invention sera donc de rechercher à exploiter les observations précédentes en vue d'augmenter les possibilités de parallélisation de certaines phases de dispatching. Il conviendra cependant que les réalisations proposées présentent aussi un fonctionnement sûr et permettant une mise en oeuvre simple. Ce but peut être atteint en effectuant un découpage du micrologiciel chargé du dispatching, ce découpage étant choisi de façon à définir au moins un module spécialisé répondant à une catégorie ou ensemble d'événements qui entraînent les mêmes types de modifications dans la répartition des processus aux processeurs, ce qui implique que les mêmes types de ressources seront utilisées. En prévoyant plusieurs modules de ce type, il en résulte une probabilité accrue que plusieurs modules soient exécutables simultanément, sans risques de conflits à l'égard des ressources systèmes.

Il conviendra en plus de prévoir un module particulier pour prendre en compte les événements, hors catégories, c'est-à-dire qui ne peuvent pas être traités par les modules spécialisés.

Plus précisément, l'invention a pour objet un système informatique multiprocesseur selon la revendication 1

Pour exploiter au mieux l'invention du point de vue performance du système et selon une caractéristique de l'invention; les catégories d'événements particuliers comprennent des événements parmi ceux qui ont les plus fortes probabilités de se produire au cours de l'exploitation.

Afin de renforcer les possibilités de parallélisation et selon une autre caractéristique de l'invention, chaque catégorie d'événements particuliers comprend des événements qui provoquent des modifications simples dans le choix des processus devant être exécutés et des processeurs qui les exécutent.

L'invention a également pour objet une réalisation particulière du système caractérisée en ce que l'état des processus exécutables dans le système étant mémorisés soit dans une file d'attente des processus en attente d'un événement, soit dans une file d'attente des processus prêts, c'est-à-dire actifs dans un processeur ou en attente d'un processeur, lesdites catégories d'événements comprennent les événements susceptibles de provoquer respectivement un ajout, un retrait ou un déplacement d'un seul processus JP dans la file d'attente des processus prêts.

Les modules spécialisés pourraient être conçus de façon à effectuer complètement et en toutes circonstances le dispatching correspondant aux événements associés. Or, cette solution impliquerait une augmentation de la complexité des modules et un encombrement accru des mémoires de microprogramme. Pour éviter cet inconvénient et conformément à une variante de réalisation selon l'invention, chaque module spécialisé est prévu pour exécuter complètement l'opération de sélection en dehors de certains cas prédéfinis qui correspondront de préférence à des situations inhabituelles et complexes, comme par exemple en présence de conflits entre dispatchings concurrents dans plusieurs processeurs. Chaque module spécialisé est prévu pour détecter ces cas et effectuer l'appel du module central. Le module central sera donc aussi conçu de façon à traiter intégralement tous ces cas inhabituels exclus du traitement par les modules spécialisés.

Ainsi, selon un mode de réalisation particulier, le système selon l'invention comporte des moyens de dialogue entre processeurs utilisés le cas échéant par les moyens microprogrammés d'un processeur pour émettre des requêtes notifiant à d'autres processeurs l'identité de nouveaux processus NJP à exécuter. D'autre part, ces moyens de dialogue sont associés à un premier verrou de dialogue utilisé par les moyens microprogrammés pour assurer qu'un seul processeur à la fois émette lesdites requêtes. Chaque module spécialisé est enfin conçu de façon à arrêter son exécution et à effectuer l'appel du module central dans le cas où l'exécution du module spécialisé implique un dialogue alors que ledit verrou est pris.

D'autres aspects et détails de réalisation conformes à l'invention seront exposés plus en détail dans la suite de la description.

- La figure 1 représente le sous-système central d'un système informatique pour la mise en oeuvre de l'invention.

- La figure 2 représente le format d'un bloc de contrôle de processus utilisé dans les opérations de dispatching.

- La figure 3 représente le format d'un bloc de contrôle de processeurs.

- La figure 4 représente le format d'un lien de processus utilisé dans les différentes files d'attente de processus.

- La figure 5 représente le format d'un sémaphore.

- La figure 6 représente le format d'un lien de messages servant à former la file d'attente des messages associée à un sémaphore.

- La figure 7 représente le format du bloc de contrôle du Système contenant les données système utilisées lors des opérations de dispatching.

- La figure 8 représente l'organigramme d'exécution d'une instruction de type P sur sémaphore.

- La figure 9 représente l'organigramme du microprogramme EXEC.

- Les figures 10 et 11 représentent l'organigramme d'une opération de type V sur sémaphore.

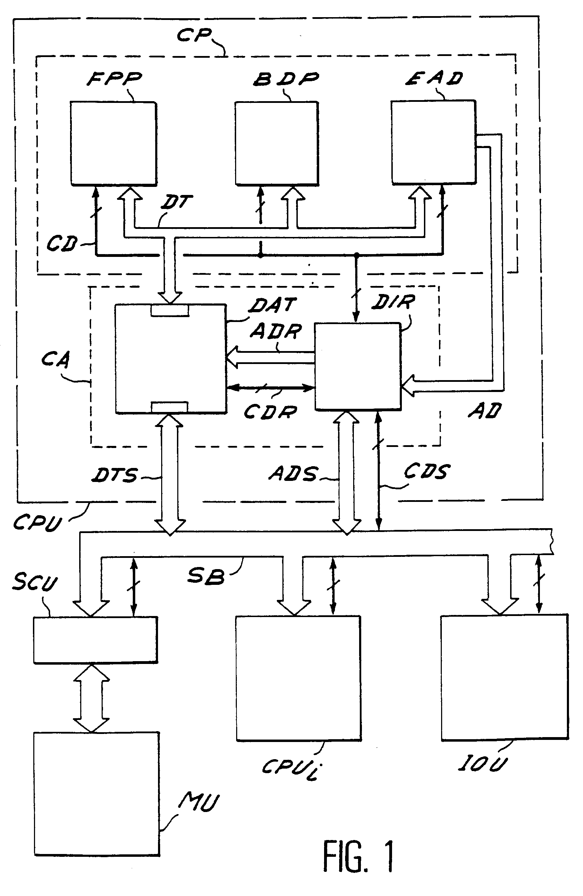

Le système représenté à la figure 1 constitue ce qu'on appelle un sous-système central d'un système informatique. Il est composé de plusieurs processeurs CPU, CPUi reliés à un bus système SB de façon à pouvoir communiquer entre eux ainsi qu'avec une mémoire centrale MU et des unités d'entrée-sortie IOU. Les unités d'entrée-sortie IOU permettent au sous-système central de communiquer avec des sous-systèmes périphériques (non représentés).

La mémoire centrale MU peut être réalisée au moyen de plusieurs modules ou cartes mémoires reliées au bus système SB par l'intermédiaire d'un circuit d'interface SCU jouant à la fois le rôle de contrôleur mémoire et de contrôleur du bus SB. De façon classique, le bus SB est constitué d'un bus de données DTS, d'un bus d'adresses ADS et de lignes de commande et de contrôle CDS.

Chaque processeur CPU comporte essentiellement des moyens de traitement microprogrammés CP et une antémémoire CA servant d'interface avec le bus système SB. L'antémémoire CA est composée de circuits mémoire DAT reliés au bus de donné DTS et d'un contrôleur DIR relié au bus d'adresse ADS et aux lignes de contrôle CDS. Les moyens de traitement CP comportent plusieurs unités fonctionnelles EAD, BDP, FPP affectées respectivement à des fonctions spécifiques. En particulier l'unité EAD est une unité d'adressage reliée au contrôleur DIR par des lignes d'adresse AD. Les unités EAD, BDP, FPP sont d'autre part reliées aux circuits mémoires DAT par un bus de données internes DT et au contrôleur DIR par des lignes de commande et de contrôle internes CD.

Le contrôleur DIR commande les opérations de lecture et d'écriture des circuits mémoire DAT par les lignes d'adresse ADR et de contrôle CDR. Il sert également à commander les opérations de lecture et d'écriture de la mémoire centrale MU pour effectuer les transferts de données entre la mémoire MU et les circuits mémoire DAT. Enfin, selon le mode de réalisation présenté, le contrôleur DIR contient également les circuits d'interface servant aux échanges de messages (par exemple requêtes et acquittements) entre le processeur CPU et les autres processeurs CPUi ou avec les unités d'entrée-sortie IOU.

La réalisation détaillée des unités fonctionnelles du processeur CPU est décrite dans la demande de brevet européen EP-A-434 483, publiée le 26 juin 1991 et ayant pour titre "Processeur à plusieurs unités de traitement microgrammées".

D'autre part, les moyens permettant les dialogues entre les processeurs CPU, CPUi du système peuvent être réalisés conformément à la demande de brevet français N° 2 662 830 publiée le 6 décembre 1991 et ayant pour titre "Procédé de dialogue entre les processeurs d'un système, système pour sa mise en oeuvre et utilisation pour la répartition des processus aux processeurs".

En ce qui concerne le fonctionnement général du système de la figure 1, il conviendra de se reporter aux demandes précitées.

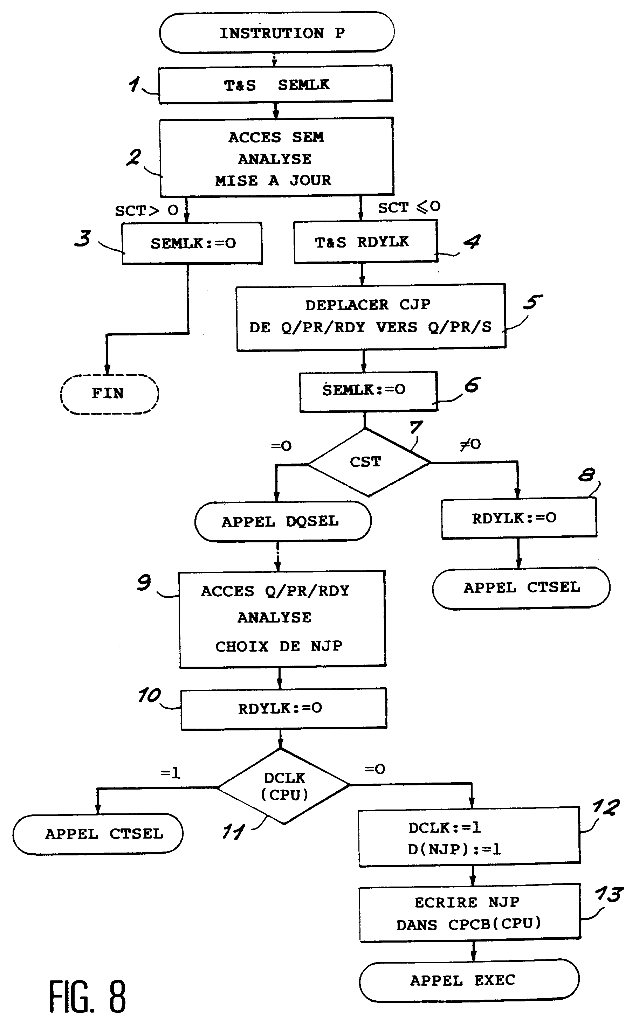

Dans ce contexte, l'invention pourra être mise en oeuvre au moyen de microprogrammes spécifiques faisant partie du micrologiciel système. Ces microprogrammes sont prévus pour coopérer avec le module micrologiciel appelé "gestionnaire d'interruption" qui sert à sélectionner les modules à exécuter en fonction d'un certain nombre d'indicateurs représentatifs d'événements susceptibles d'être pris en compte par le système. Les microprogrammes spécifiques permettant la mise en oeuvre de l'invention seront décrits en référence aux figures 8 à 11 mais il convient auparavant de donner quelques précisions sur les ressources du système manipulées par ces microprogrammes.

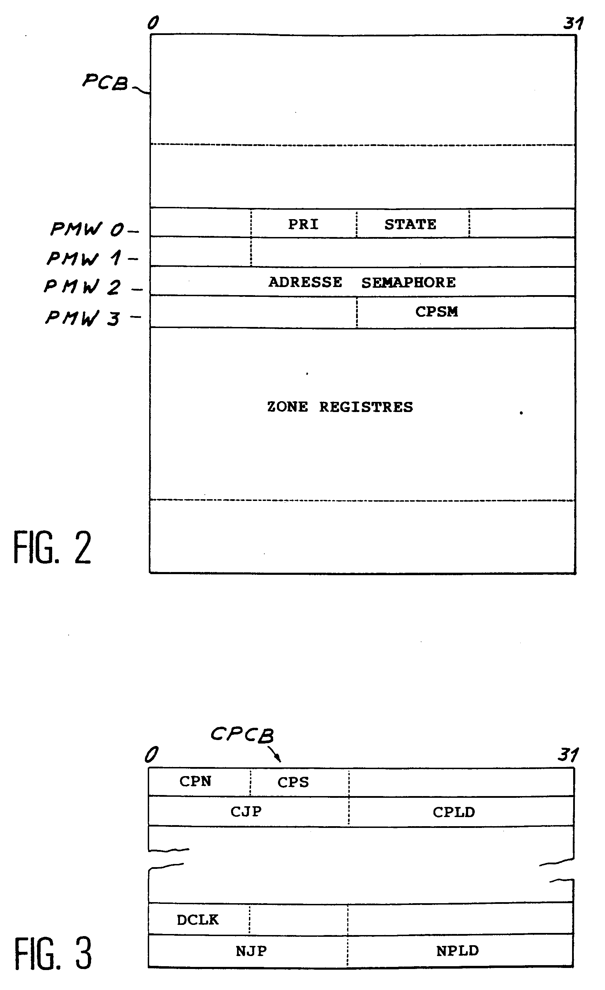

La figure 2 représente une structure de données appelée "bloc de contrôle de processus" PCB associée à chaque processus constitué dans le système. Ce bloc est une zone de mémoire constituée d'un certain nombre de mots de 32 bits contenant toutes les informations concernant le processus et qui sont utiles au système. Seules les informations intervenant dans la mise en oeuvre de l'invention ont été représentées. Parmi ces informations, on trouve dans le mot PMW0 un champ PRI représentant le niveau de priorité du processus et un champ STATE indicatif de l'état du processus. La valeur prise par ce champ STATE indique notamment si le processus est actif ou s'il est prêt et en attente d'un processeur libre ou s'il est en attente d'un événement. Le champ PMW2 est affecté à l'adresse d'un sémaphore dans le cas où le processus est en attente d'un événement associé à ce sémaphore. Le champ CPSM du mot PMW3 est un masque dont le profil binaire définit les processeurs du système autorisé à exécuter le processus. Un ensemble de mots appelé "zone registres" sert à sauvegarder le contexte du processus, c'est-à-dire le contenu des registres du processeur ayant exécuté pour la dernière fois le processus, juste avant que son exécution soit interrompue.

La figure 3 représente une zone mémoire associée à chaque processeur, appelée "bloc de contrôle de processeur" CPCB et servant de boîte aux lettres pour les échanges d'information entre un processeur émetteur et le processeur destinataire associé à ce bloc.

Le bloc CPCB comporte un champ CPN contenant le numéro du processeur, un champ CPS indiquant l'état du processeur, un champ CJP contenant le numéro du processus en cours d'exécution dans le processeur, un champ CPLD représentatif de l'adresse du lien de ce processus dans la file d'attente des processus prêts Q/PR/RDY, un champ NJP indiquant le numéro du nouveau processus que le processeur doit exécuter et un champ NPLD indicatif de l'adresse du lien de ce processus.

Le bloc CPCB contient également un indicateur binaire DCLK servant de verrou et dont l'état logique signale si la boîte aux lettres est occupée ou non.

Nous allons maintenant décrire les ressources permettant de définir les files d'attente des processus. Tous ces éléments ont déjà fait l'objet d'une description détaillée dans le brevet US-A-4,590,555 précité et dans le brevet US 4,395,757, délivré le 26 juillet 1983, et intitulé "Semaphore device for computer". Nous ne rappelerons donc que brièvement les éléments essentiels qui sont impliqués dans la présente invention.

Comme nous l'avons indiqué précédemment, on distingue deux catégories de files d'attente de processus : la file d'attente des processus prêts Q/PR/RDY et la ou les files d'attente des processus en attente d'un événement. Ces files d'attente sont matérialisées par un ensemble de structures de données appelées "liens", chaque lien étant associé à un processus particulier.

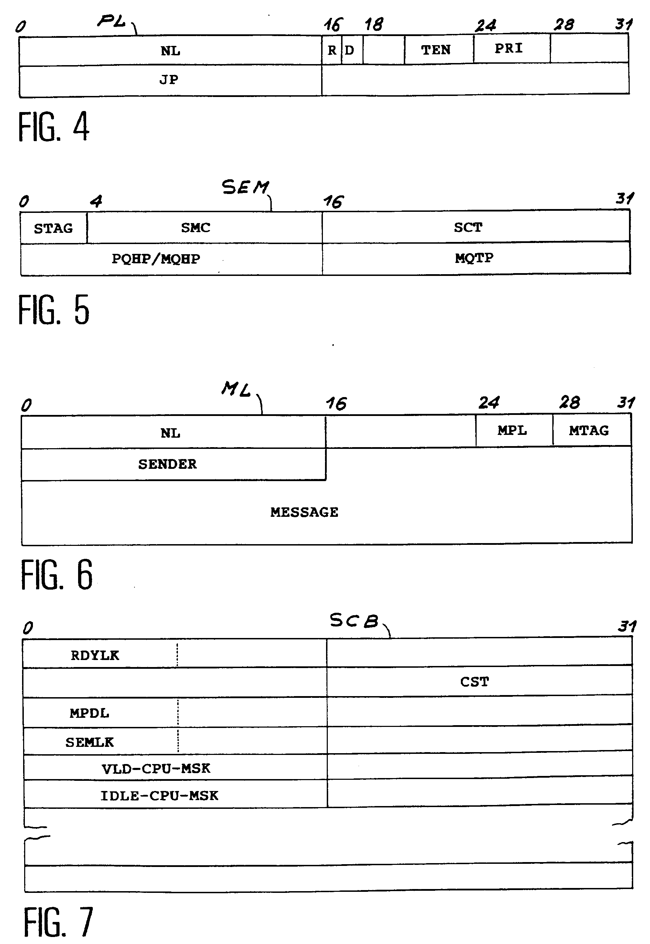

La figure 4 représente un exemple de format d'un tel lien PL. Ce lien est composé de deux mots de 32 bits comprenant plusieurs champs ayant les significations suivantes :

. NL est un pointeur représentatif de l'adresse du lien suivant dans la file d'attente ;

. JP est l'identité du processus associé au lien ;

. R est un bit représentatif de l'état du processus associé ;

. D est un bit auxiliaire qui est la copie du verrou DCLK pour faciliter l'exécution du dispatching ;

. TEN est l'identité du processeur exécutant ou ayant exécuté pour la dernière fois le processus ;

. PRI correspond au niveau de priorité du processus.

L'accès à une file d'attente peut être réalisé au moyen d'un pointeur représentatif de l'adresse du premier lien dans la file d'attente, c'est-à-dire du lien associé au processus le plus ancien dans la file d'attente. Lorsqu'un lien est retiré de la file d'attente, le pointeur prend la valeur contenue dans le champ NL de ce lien. Lorsqu'un lien est ajouté, le champ NL du dernier lien prend une valeur correspondant à l'adresse de ce nouveau lien.

Selon le mode de réalisation particulier utilisé dans le contexte de l'invention, on prévoit une seule file d'attente Q/PR/RDY regroupant les processus prêts et actifs et les processus prêts et non actifs. La valeur logique du bit R permet alors de distinguer si le processus est actif (R = 1) ou non (R = 0).

Concernant les processus en attente d'événements, on utilise également des files d'attente dont les liens ont le format représenté à la figure 4. Chaque file d'attente Q/PR/S est associée à une structure de donnée, appelée "sémaphore", chaque sémaphore étant associé à un type d'événement particulier.

On peut aussi prévoir que certains sémaphores puissent aussi être associés à des files d'attente de messages Q/M/S matérialisés par des liens de message tels que représentés à la figure 6.

Le format d'un sémaphore SEM est représenté à la figure 5.

Il est formé de deux mots de 32 bits comprenants plusieurs champs ayant les significations suivantes :

. STAG indique le type de sémaphore selon qu'il peut être associé ou non à une file d'attente de messages ;

. SMC indique le nombre maximum de processus ou de messages que peut contenir la file d'attente associée ;

. SCT est un nombre algébrique dont la valeur absolue indique le nombre de processus ou de message contenus dans la file d'attente et dont le signe indique s'il s'agit de processus ou de messages ;

. PQHP/MQHP est un pointeur représentatif de l'adresse du premier lien de processus ou de message de la file d'attente ;

. MQTP est un pointeur indicatif de l'adresse du dernier lien de processus ou de message de la file d'attente.

Le format d'un lien de message ML est représenté à la figure 6. Il comprend plusieurs champs ayant les significations suivantes :

. NL est un pointeur représentatif de l'adresse du lien de message suivant ;

. SENDER est l'identité du processus émetteur du message ;

. MPL correspond au niveau de priorité du message ;

. MTAG est un indicateur définissant le type de message ;

. MESSAGE est la zone réservée au message proprement dit.

Il existe également un sémaphore particulier permettant de gérer une file d'attente de processus en attente d'un lien de message libre ou une file d'attente des liens de message libres ainsi qu'un sémaphore gérant une file d'attente des liens de processus libres.

Le brevet US-A-4,395,757 décrit comment sont utilisés les sémaphores pour réaliser la synchronisation des processus. Nous ne décrirons donc pas en détail ces opérations mais il convient de rappeler qu'elles sont provoquées par des instructions de type P ou V ayant pour effet respectivement de décrémenter ou d'incrémenter le compteur SCT initialement à 0 du sémaphore. Ainsi un compte SCT positif signifie qu'un événement ou un message associé au sémaphore a déjà été notifié par au moins un processus. Par contre, un compte SCT négatif indique qu'au moins un processus est en attente d'un événement ou d'un message associé au sémaphore. Nous verrons plus précisément en référence aux figures 8 à 11 le déroulement des instructions P et V dans le cadre de l'invention.

La figure 7 représente une autre structure de données appelée "bloc de contrôle du système" SCB regroupant toutes les données utiles au système pour sa gestion. Il comprend notamment des champs particuliers utilisés lors des opérations de dispatching. Ces champs ont les significations suivantes ;

- RDYLK est un verrou associé à la file d'attente des processus prêts S/PR/RDY ;

- CST contient la valeur d'un compteur de contraintes indiquant le nombre de processus constitués dans le système qui doivent être exécutés par des processeurs particuliers ;

- MPDL est un verrou de dialogue entre processeurs ;

- SEMLK est un ensemble de verrous associés respectivement à des sémaphores ou à des groupes de sémaphores ;

- VLD-CPU-MSK est un masque dont le profil binaire permet de déterminer les processeurs valides du système ;

- IDLE-CPU-MSK est un masque dont le profil binaire permet de déterminer les processeurs inactifs dans le système.

Nous allons maintenant montrer comment l'invention peut être utilisée dans le cas des deux exemples particuliers que sont les instructions de type P et V sur sémaphores.

L'organigramme de la figure 8 montre les opérations déclenchées par une instruction de type P exécutée par le processeur CPU. Nous rappelons que l'apparition d'une instruction P dans un processeur signifie que le processus contenant cette instruction doit vérifier si un événement associé à un sémaphore particulier est survenu ou si un message a été transmis avant de pouvoir continuer son exécution. L'exécution de l'instruction P correspond à l'exécution d'un microprogramme correspondant que nous allons expliquer.

L'étape 1 est une opération de "TEST AND SET" du verrou SEMLK associé au sémaphore identifié dans l'instruction P. Nous rappelons que cette opération connue en soi consiste ici à accéder au verrou SEMLK contenu dans le bloc de contrôle du système SCB. Si le verrou est libre (SEMLK = 0), le verrou est mis à l'état occupé (SEMLK : = 1) et le microprogramme se poursuit. Si par contre le verrou est pris (SEMLK = 0), le microprogramme se met en attente jusqu'à la libération du verrou.

L'étape 2 suivante consiste à accéder au sémaphore SEM, à analyser son contenu et à procéder à sa mise à jour consistant notamment à décrémenter le compte SCT d'une unité. Si le compte SCT était positif, cela signifie que l'événement ou le message sollicité par le processus a déjà été notifié. Dans ce cas, le verrou SEMLK est libéré à l'étape 3 (SEMLK : = 0) et l'instruction suivante du processus peut généralement s'exécuter. Il est à noter que si le sémaphore est du type avec message, la mise à jour du sémaphore consistera aussi à retirer un lien de message de la file d'attente des messages. De plus, le contenu du message sera chargé dans les registres de travail du processeur. Dans des cas particuliers, il est également possible que cette opération entraîne la libération d'un processus en attente d'un lien libre de message, auquel cas le microprogramme fait appel à un module spécialisé pour traiter cette situation.

Si le compte SCT était négatif ou nul, l'exécution du processus doit être interrompue. Une opération de TEST AND SET du verrou RDYLK est alors effectuée à l'étape 4 puis, à l'étape 5, le lien du processus CJP en cours d'exécution est déplacé de la file Q/PR/RDY vers la file Q/PR/S associée au sémaphore SEM. Le verrou SEMLK est alors libéré à l'étape 6 puis, à l'étape 7, le champs CST du bloc SCB est testé. Si CST est différent de 0, cela signifie qu'il existe des processus avec contraintes. Le microprogramme se branche alors sur le module central CTSEL après avoir libéré le verrou RDYLK à l'étape 8. Le module CTSEL peut être réalisé conformément à la demande de brevet français publiée sous le numéro FR-A-2 662 830 précitée.

Si le compteur CST est nul, le microprogramme fait appel au module DQSEL spécialisé pour effectuer le choix d'un nouveau processus NJP dans le cas d'un retrait d'un processus de la file d'attente des processus prêts Q/PR/RDY.

L'exécution du module DQSEL commence par l'étape 9 qui procède à l'accès à la file d'attente des processus prêts Q/PR/RDY et à son analyse. Cette analyse consiste essentiellement à sélectionner celui des processus prêts NJP dans la file Q/PR/RDY (supposée non vide) qui doit passer à l'état actif. Le verrou RDYLK est ensuite libéré à l'étape 10.

L'étape 11 suivante consiste à tester le verrou de boîte aux lettres DCLK contenu dans le bloc de contrôle de processeur CPCB du processeur exécutant DQSEL. Si le verrou DCLK est pris (DCLK = 1), cela signifie qu'un dialogue entre processeur est déjà en cours et que l'on est par conséquent en présence d'un conflit entre dispatching. Le microprogramme fait alors appel au module centralisé CTSEL.

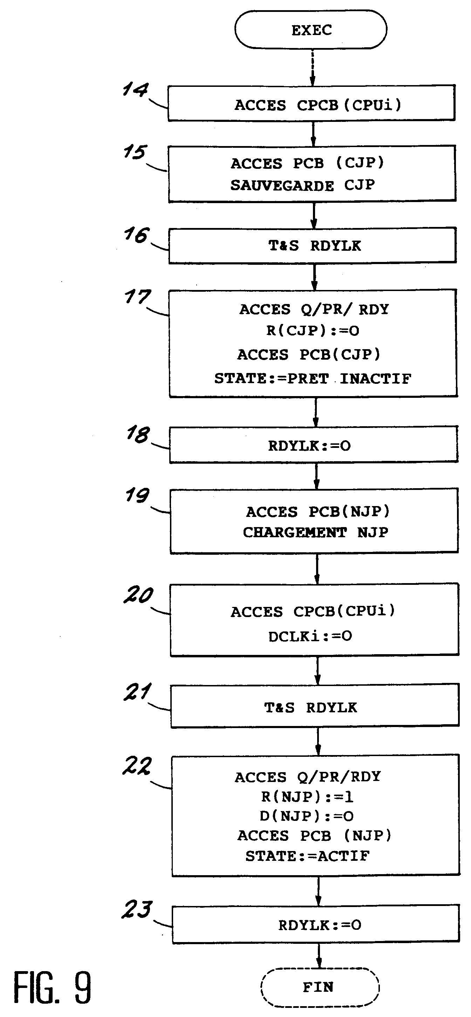

Si par contre le verrou DCLK est libre (DCLK = 0), le microprogramme prend ce verrou à l'étape 12 (DCLK : = 1) et force à 1 le bit D du lien associé au processus NJP. Il procède ensuite à l'étape 13 à l'inscription du numéro du processus sélectionné NJP dans le champ correspondant du bloc CPCB. L'étage 13 se termine par l'appel du module EXEC qui va maintenant être décrit en référence à la figure 9.

L'organigramme de la figure 9 présente le cas général d'un processeur quelconque CPUi exécutant le module EXEC. Bien entendu, lorsque ce module est appelé par une opération DQSEL exécutée par le processeur CPU, il sera exécuté par le ême processeur, donc avec CPUi = CPU .

Le module EXEC débute à l'étape 14 par un accès au bloc de contrôle de processeur CPCB du processeur CPUi pour prendre en compte le numéro du nouveau processus à exécuter NJP. Il accède ensuite à l'étape 15 au bloc de contrôle de processus PCB du processus CPJ en cours d'exécution dans CPUi pour effectuer la sauvegarde du contexte de ce processus. Il effectue ensuite à l'étape 16 une opération de TEST AND SET du verrou RDYLK puis, à l'étage 17, il accède à la file Q/PR/RDY pour effectuer sa mise à jour consistant à mettre à 0 le bit R du lien du processus CJP. Il accède aussi au bloc PCB de CJP pour mettre le champs STATE à l'état "prêt et non actif". Le verrou RDYLK est ensuite libéré à l'étape 18. A l'étape 19, le bloc de contrôle de processus PCB du processus sélectionné NJP est accédé pour effectuer le chargement du contexte de ce processus dans les registres du processeur. A l'étape 20, le bloc CPCB du processeur CPUi est accédé pour libérer son verrou DCLKi. Un opération de TEST AND SET du verrou RDYLK est à nouveau effectuée à l'étape 21 puis la file Q/PR/RDY est à nouveau accédée à l'étape 22 pour la mise à jour du champs TEN et pour mettre respectivement à 1 et à 0 les bits R et D du lien du processus NJP. De plus, le champs STATE du bloc PCB de NJP est mis à l'état "actif". Après cette opération, le verrou RDYLK est à nouveau libéré à l'étape 23.

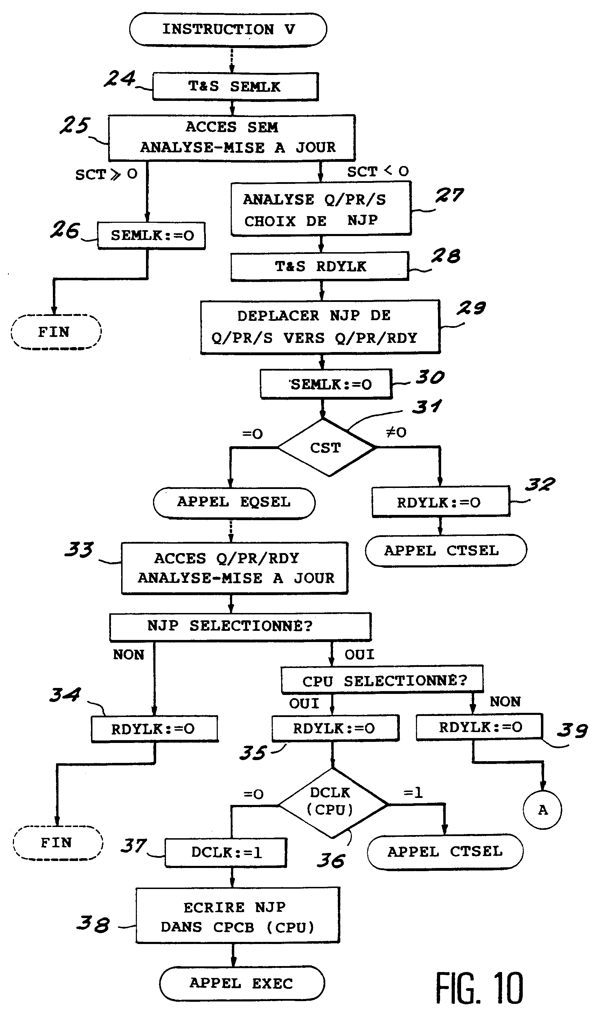

Les opérations déclenchées par une instruction de type V sont représentées sur l'organigramme de la figure 10. Une instruction V est l'instruction complémentaire d'une instruction P. Elle signifie que le processus contenant cette instruction notifie un événement ou un message à un sémaphore particulier.

Le microprogramme d'exécution d'une instruction V débute à l'étape 24 par une opération de TEST AND SET du verrou SEMLK associé au sémaphore SEM identifié dans l'instruction V. L'étape 25 suivante consiste à accéder au sémaphore, à analyser son contenu et à procéder à sa mise à jour consistant notamment à incrémenter le compte SCT d'une unité. Si le compte SCT était positif ou nul, cela signifie qu'aucun processus n'est en attente de l'événement ou du message notifié par l'instruction V. Dans ce cas, le verrou SEMLK est libéré à l'étape 26 et l'instruction suivante du processus peut normalement s'exécuter. Si le sémaphore est du type avec message, la mise à jour du sémaphore consistera aussi à ajouter un lien de message dans la file d'attente des messages. Dans le cas particulier où il n'y a plus aucun lien de message libre, le microprogramme fait appel à un module spécialisé non décrit pour traiter ce cas.

Si le compte SCT était négatif, cela signifie qu'il y a au moins un processus en attente de l'événement ou du message dans la file d'attente Q/PR/S associée au sémaphore. La file Q/PR/S est alors analysée à l'étape 27 pour sélectionner le processus NJP devant être retiré de cette file d'attente et placé dans la file Q/PR/RDY des processus prêts. Dans ce but, une opération de TEST AND SET du verrou RKYLK est effectuée à l'étape 28 puis, au cours de l'étape 29, le lien du processus sélectionné NJP est déplacé de la file Q/PR/S vers la file Q/PR/RDY. Le verrou SEMLK est ensuite libéré à l'étape 30.

Le champs CST est ensuite testé à l'étape 31. Si CST est différent de 0, le microprogramme se branche sur le module centralisé CTSEL. Si par contre le compteur CST est nul, le microprogramme fait appel au module EQSEL spécialisé pour traiter le cas d'un ajout d'un processus dans la file d'attente des processus prêts Q/PR/RDY.

L'exécution du module EQSEL commence par l'étape 33 qui procède à l'accès à la file d'attente des processus prêts Q/PR/RDY en vue de déterminer si le nouveau processus NJP doit devenir actif et dans ce cas sélectionner celui des processeurs CPU, CPUi qui devra l'exécuter. Cette opération peut être alors très simple si l'on a prévu un pointeur vers le lien du dernier processus actif ayant le plus bas niveau de priorité. Dans ce cas, il suffit de comparer le niveau de priorité de NJP avec celui du processus désigné par le pointeur. Si NJP a une priorité égale ou inférieure, il ne sera pas sélectionné. Si par contre NJP est plus prioritaire, il devra remplacer ce processus dont le lien indique par son champs TEN le processeur concerné.

Si le processus NJP n'est pas sélectionné, l'opération se termine par la libération du verrou RDYLK à l'étape 34.

Si par contre le processus NJP est sélectionné, l'un des processeurs du système CPU, CPUi devra interrompre l'exécution de son processus en cours pour le remplacer par le processus sélectionné NJP. Si le processeur sélectionné est le processeur CPU qui exécute le module EQSEL, l'opération se poursuit par la libération du verrou RDYLK à l'étape 35 puis par le test du verrou DCLK de la boîte aux lettres du processeur CPU à l'étape 37. Si le verrou est pris, le microprogramme se branche sur le module central CTSEL. Si par contre le verrou DCLK est libre, le microprogramme prend ce verrou à l'étape 37 et procède ensuite à l'étape 38 à l'inscription du numéro du processus sélectionné NJP dans le champ correspondant du bloc CPCB du processeur CPU. L'étape 38 se termine par l'appel du module EXEC qui a été décrit en référence à la figure 9.

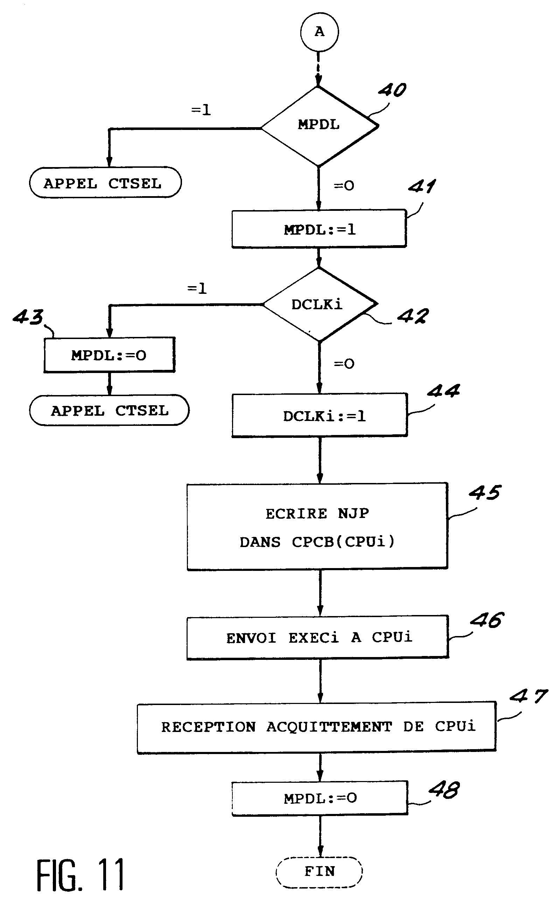

Si l'analyse effectuée à l'étape 33 conduit à sélectionner un autre processeur CPUi, le verrou RDYLK est libéré à l'étape 39 et le microprogramme se poursuit par les opérations A représentées à la figure 11.

L'étape suivante 40 effectue le test du verrou de dialogue MPDL. Si ce verrou est pris, le microprogramme se branche sur le module central CTSEL. Si par contre MPDL est libre, le microprogramme prend ce verrou à l'étape 41. Il teste ensuite à l'étape 42 le verrou de boîte aux lettres DCLK$i$ du processeur CPUi sélectionné. Si le verrou DCLK$i$ est pris, le microprogramme se branche sur le module central CTSEL après avoir libéré MPDL à l'étape 43. Si par contre DCLK$i$ est libre, il prend le verrou à l'étape 44. Il procède ensuite à l'étape 45 à l'inscription du numéro du processus sélectionné NJP dans le champ correspondant du bloc CPCB du processeur sélectionné CPUi.

Le microprocesseur utilise ensuite à l'étape 46 les moyens de dialogue entre processeurs en envoyant une interruption EXECi au processeur CPUi. Ensuite, lors de l'étape 47, le microprogramme se met en attente de l'acquittement qui doit être émis par le processeur CPUi. Lorsque cet acquittement est reçu, le verrou de dialogue MPDL est libéré à l'étape 48 qui termine l'opération. Le processeur pourra alors poursuivre l'exécution du processus qui lui est affecté.

L'envoi de l'interruption EXECi au processeur CPUi à l'étape 46 a pour effet d'activer dans ce processeur le gestionnaire d'interruption qui procèdera à l'appel du module EXEC déjà décrit en référence à la figure 9. Ainsi, ce n'est qu'au cours de l'exécution de ce module à l'étape 20 que sera libérée le verrou de boîte aux lettres DCLK$i$.

Selon une particularité intéressante de la réalisation, on prévoit que l'appel du module EXEC dans un processeur par ce même processeur (étapes 13 de la figure 8 et 38 de la figure 10) se fera par le mécanisme général d'interruption décrit dans la demande de brevet français n° FR-A-2 662 830 précitée qui permet qu'une processeur peut se notifier à soi-même des messages. Bien entendu, le verrou de dialo-

que MPDL n'intervient pas dans un tel cas.

Afin d'optimiser davantage le fonctionnement, on pourra prévoir que le champs CST du bloc SCB comporte un indicateur de conflit mis à un état différent de 0 chaque fois qu'un conflit est détecté lors des tests des verrous DCLK et MPDL (étape 11, 37, 40). Ainsi, le test de CST (étapes 7, 31) tiendra compte très tôt de l'existence d'un conflit entre dispatchings.

La description détaillée des opérations P et V sur sémaphore qui précède montre comment utiliser les modules spécialisés EQSEL et DQSEL en coopération avec le module central CTSEL pour permettre une exécution répartie du dispatching avec des possibilités accrues de parallélisme. On peut remarquer en particulier que plusieurs processeurs peuvent exécuter simultanément certaines phases de dispatchings différents, avec pour seule contrainte l'interdiction d'accès simultané à certaines ressources partagées (sémaphores, files Q/PR/RDY, mécanisme de dialogue, boîtes aux lettres). Ces interdictions sont assurées très simplement aux moyens de verrous associés à ces ressources et garantissent ainsi l'intégrité du système.

Bien entendu, les modules EQSEL et DQSEL peuvent aussi intervenir en réponse à d'autres instructions que les instructions P et V. C'est le cas en particulier pour l'instruction START qui a pour fonction d'introduire un nouveau processus dans le système.

Conformément à l'invention, on pourra également prévoir d'autres modules spécialisés qui seront choisis en fonction du contexte d'exploitation du système. On pourra par exemple prévoir un module CHSEL pour répondre au cas où une instruction commande le déplacement d'un lien de processus dans la file Q/PR/RDY. C'est le cas par exemple de l'instruction CHOP qui modifie le niveau de priorité du processus qui la contient ou de l'instruction RLQ qui provoque l'abandon du droit à exécution du processus.

Les microprogrammes traitant ces autres cas pourront être réalisés en s'inspirant de la description détaillée des modules EQSEL et DQSEL exposés ci-dessus. Ces réalisations sont à la portée de l'homme du métier et ne nécessitent donc pas d'explications supplémentaires.

**Revendications**

1. Système informatique multiprocesseur dont une pluralité de processeurs (CPU) sont munis chacun de moyens microprogrammés (CP) pour effectuer la répartition des processus (JP) aux processeurs (CPU) du système, lesdits moyens microprogrammés (CP) étant activés dans un processeur (CPU) en réponse à tout événement détecté par ledit processeur (CPU) et qui est susceptible de provoquer une modification dans le choix des processus (JP) devant être exécutés et des processeurs (CPU) qui les exécutent, ledit système étant caractérisé en ce que lesdits moyens microprogrammés (CP) comportent au moins un module spécialisé de microprogramme (CHSEL, DQSEL, EQSEL) capable de déterminer ladite répartition en réponse à une catégorie d'événements particuliers et un module général de microprogramme (CTSEL) capable de déterminer ladite répartition pour des événements autres que ceux traités par lesdits modules spécialisés (CHSEL, DQSEL, EQSEL), de sorte que plusieurs processeurs peuvent exécuter simultanément certaines phases de dispatchings différents.

2. Système selon la revendication 1 caractérisé en ce que chaque catégorie d'événements particuliers comprend des événements parmi ceux qui ont la plus forte probabilité de se produire au cours de l'exploitation du système.

3. Système selon l'une des revendications 1 ou 2 caractérisé en ce que chaque catégorie d'événements particuliers comprend des événements qui provoquent des modifications simples dans le choix des processus (JP) devant être exécutés et des processeurs (CPU) qui les exécutent.

4. Système selon la revendication 3 caractérisé en ce que l'identité des processus (JP) exécutables dans le système étant mémorisée soit dans une file d'attente (Q/PR/S) des processus en attente d'un événement, soit dans au moins une file d'attente (Q/PR/RDY) des processus prêts, c'est-à-dire actifs dans un processeur ou en attente d'un processeur, lesdites catégories d'événements comprennent les événements susceptibles de provoquer respectivement un ajout, un retrait ou un déplacement d'un seul processus (JP) dans la file d'attente (Q/PR/RDY) des processus prêts.

5. Système selon la revendication 4 caractérisé en ce que la file d'attente (Q/PR/RDY) des processus prêts est associée à un verrou (RDYLK) utilisé par lesdits moyens microprogrammés (CP) pour assurer qu'un seul processeur (CPU) à la fois puisse modifier l'état de la file d'attente (Q/PR/RDY) des processus prêts.

6. Système selon l'une des revendications 4 ou 5 caractérisé en ce que les files d'attente des processus en attente d'un événement (Q/PR/S) sont associées à au moins un verrou (SEMLK) utilisé par lesdits moyens microprogrammés (CP) pour assurer qu'un seul processeur (CPU) à la fois puisse modifier l'état de la file d'attente (Q/PR/S) des processus en attente d'un événement.

7. Système selon l'une des revendications 1 à 6 caractérisé en ce que ledit ou lesdits modules spécialisés (CHSEL, DQSEL, EQSEL) sont prévus pour pouvoir effectuer l'appel du module général (CTSEL).

8. Système selon la revendication 7 caractérisé en ce qu'il comporte des moyens de dialogue entre processeurs utilisés le cas échéant par lesdits moyens microprogrammés, moyens (CP) d'un processeur (CPU) pour émettre des requêtes (EXECi) notifiant à d'autres processeurs (CPUi) l'identité de nouveaux processus (NJP) à exécuter, en ce que lesdits moyens de dialogue sont associés à un premier verrou de dialogue (MPDL) utilisé par lesdits moyens microprogrammés (CP) pour assurer qu'un seul processeur (CPU) à la fois émette lesdites requêtes (EXECi) et en ce que, chaque module spécialisé est conçu de façon à arrêter son exécution et à effectuer l'appel du module général (CTSEL) dans le cas où l'exécution dudit module spécialisé (CHSEL, DQSEL, EQSEL) implique un dialogue alors que ledit verrou (MPDL) est pris.

9. Système selon la revendication 8 caractérisé en ce que lesdits moyens de dialogue comportent une boîte aux lettres (CPCB) associée à chaque processeur (CPUi) et utilisée par lesdits moyens microprogrammés (CP) pour transmettre lesdites requêtes (EXECi), en ce que chaque boite aux lettres (CPCB) est associée à un verrou (DCLK) qui est mis à l'état occupé par le processeur (CPU) émetteur des requêtes (EXECi) et libéré par le processeur associé à la boîte aux lettres (CPUi) après exécution de la requête qui lui était destinée et en ce que chaque module spécialisé est conçu de façon à arrêter son exécution et à effectuer l'appel dudit module général (CTSEL) dans le cas où l'exécution dudit module spécialisé (CHSEL, DQSEL, EQSEL) implique l'envoi d'une requête (EXECi) à un processeur (CPUi) alors que le verrou (DCLK) de sa boîte aux lettres est pris.

10. Système selon l'une des revendications 1 à 9 caractérisé en ce qu'il comporte un indicateur de contraintes (CST) dont l'état est indicatif de l'existence dans le système de processus (JP) avec contraintes, c'est-à-dire dont l'exécution doit être effectuée par certains processeurs (CPU) particuliers, et en ce que lesdits moyens microprogrammés (CP) sont conçus de façon à ce que la répartition des processus (JP) aux processeurs (CPU) soit effectuée par ledit module général (CTSEL) lorsque ledit indicateur (CST) signale l'existence de contraintes.

**Claims**

1. Multiprocessor computer system, in which a plurality of processors (CPU) are each provided with firmware means (CP) to effect the distribution of the processes (JP) to the processors (CPU) of the system, said firmware means (CP) being activated in a processor (CPU) in response to any event detected by said processor (CPU) and which is capable of causing a change to the choice of processes (JP) that have to be executed and the processors (CPU) that execute them, said system being characterised in that said firmware means (CP) comprise at least one specialised firmware module (CHSEL, DQSEL, EQSEL) capable of determining said distribution in response to a category of particular events and a general firmware module (CTSEL) capable of determining said distribution for events other than those handled by said specialised modules (CHSEL, DQSEL, EQSEL), so that several processors can execute simultaneously certain different dispatch phases.

2. System according to Claim 1 characterised in that each category of particular events comprises events from among those that have the highest probability of taking place during the operation of the system.

3. System according to one of Claims 1 or 2 characterised in that each category of particular events comprises events that cause simple changes in the choice of processes (JP) that have to be executed and the processors (CPU) that execute them.

4. System according to Claim 3 characterised in that the identity of the processes (JP) that are executable in the system being stored in a queue (Q/PR/S) of processes awaiting an event, either in at least one queue (Q/PR/RDY) of processes that are ready, i.e. active in a processor or waiting for a processor, said categories of events comprise the events capable of causing respectively an addition to, a removal from or a displacement of a single process (JP) in the queue (Q/PR/RDY) of the processes that are ready.

5. System according to Claim 4 characterised in that the queue (Q/PR/RDY) of processes that are ready is associated with a lock (RDYLK) used by said firmware means (CP) in order to ensure that a single processor (CPU) at a time can change the state of the queue (Q/PR/RDY) of processes that are ready.

6. System according to one of Claims 4 or 5 characterised in that the queues of processes awaiting an event (Q/PR/S) are associated with at least one lock (SEMLK) used by said firmware means (CP) to ensure that a single processor (CPU) at a time can change the state of the queue (Q/PR/S) of the processes awaiting an event.

**7.** System according to one of Claims 1 to 6 characterised in that said specialised module or modules (CHSEL, DQSEL, EQSEL) are provided so as to call upon the general module (CTSEL).

**8.** System according to Claim 7 characterised in that it comprises means for dialogue between processors used where appropriate by said firmware means, means (CP) of a processor (CPU) for sending requests (EXECi) notifying other processors (CPUi) of the identity of new processes (NJP) to be executed, in that said dialogue means are associated with a first dialogue lock (MPDL) used by said firmware means (CP) to ensure that a single processor (CPU) at any one time sends said requests (EXECi) and in that each specialised module is designed so as to stop its execution and to call upon the general module (CTSEL) where the execution of said specialised module (CHSEL< DQSEL, EQSEL) involves a dialogue while said lock (MPDL) is set.

**9.** System according to Claim 8 characterised in that said dialogue means comprise a mailbox (CPCB) associated with each processor (CPUi) and used by said firmware means (CP) for transmitting said requests (EXECi), in that each mailbox (CPCB) is associated with a lock (DCLK), which is put into the busy state by the processor (CPU) that sends the requests (EXECi) and released by the processor associated with the mailbox (CPUi) after executing the request that was addressed to it and in that each specialised module is designed so as to stop its execution and to call upon said general module (CTSEL) where the execution of said specialised module (CHSEL, DQSEL, EQSEL) involves the sending of a request (EXECi) to a processor (CPUi) while the lock (DCLK) of its mailbox is set.

**10.** System according to one of Claims 1 to 9 characterised in that it comprises a constraint indicator (CST), the state of which is indicative of the existence in the system of processes (JP) with constraints, i.e. the execution of which has to be performed by certain particular processors (CPU), and in that said firmware means (CP) are designed so that the distribution of the processes (JP) to the processors (CPU) is effected by said general module (CTSEL) when said indicator (CST) notifies the existence of constraints.

**Patentansprüche**

**1.** Multiprozessor-Datenverarbeitungssystem, in dem mehrere Prozessoren (CPU) jeweils mit mikroprogrammierten Mitteln (CP) versehen sind, um die Verteilung von Prozessen (JP) an die Prozessoren (CPU) des Systems zu bewirken, wobei die mikroprogrammierten Mittel (CP) in einem Prozessor (CPU) als Antwort auf jedes von dem Prozessor (CPU) erfaßte Ereignis, das eine Modifikation in der Wahl der Prozesse (JP) vor ihrer Ausführung und der sie ausführenden Prozessoren (CPU) hervorrufen kann, aktiviert werden, wobei das System dadurch gekennzeichnet ist, daß die mikroprogrammierten Mittel (CP) wenigstens ein spezialisiertes Mikroprogramm-Modul (CHSEL, DQSEL, EQSEL), das die Verteilung als Antwort auf eine Kategorie besonderer Ereignisse bestimmen kann, sowie ein allgemeines Mikroprogramm-Modul (CTSEL) enthalten, das die Verteilung für diejenigen Ereignisse bestimmen kann, die von jenen verschieden sind, die von den spezialisierten Modulen (CHSEL, DQSEL, EQSEL) verarbeitet werden, so daß mehrere Prozessoren gleichzeitig bestimmte Phasen unterschiedlicher Abfertigungen ausführen können.

**2.** System nach Anspruch 1, dadurch gekennzeichnet, daß jede Kategorie besonderer Ereignisse solche Ereignisse enthält, die die höchste Wahrscheinlichkeit dafür besitzen, daß sie während des Betriebs des Systems auftreten.

**3.** System nach irgendeinem der Ansprüche 1 oder 2, dadurch gekennzeichnet, daß jede Kategorie besonderer Ereignisse Ereignisse enthält, die einfache Modifikationen in der Wahl der Prozesse (JP) vor ihrer Ausführung und der sie ausführenden Prozessoren (CPU) hervorrufen.

**4.** System nach Anspruch 3, dadurch gekennzeichnet, daß die Identität der in dem System ausführbaren Prozesse (JP) entweder in einer Warteschlange (Q/PR/S) von auf ein Ereignis wartenden Prozessen oder in wenigstens einer Warteschlange (Q/PR/RDY) von bereiten Prozessen, d. h. von Prozessen, die in einem Prozessor aktiv sind oder auf einen Prozessor warten, gespeichert ist, wobei die Kategorien von Ereignissen die Ereignisse enthalten, die eine Hinzufügung, eine Entnahme bzw. eine Verschiebung eines einzigen Prozesses (JP) in der Warteschlange (Q/PR/RDY) von bereiten Prozessen hervorrufen können.

**5.** System nach Anspruch 4, dadurch gekennzeichnet, daß der Warteschlange (Q/PR/RDY) von bereiten Prozessen eine Sperre (RDYLK) zugeordnet ist, die von den mikroprogrammierten Mitteln (CP) verwendet wird, um sicherzustellen, daß ein einziger Prozessor (CPU) auf einmal den Zustand der Warteschlange (Q/PR/RDY) von bereiten Prozessen modifizieren kann.

**6.** System nach einem der Ansprüche 4 oder 5, dadurch gekennzeichnet, daß den Warteschlangen (Q/PR/S) von auf ein Ereignis wartenden Prozessen wenigstens eine Sperre (SEMLK) zugeordnet ist, die von den mikroprogrammierten Mitteln (CP) verwendet wird, um sicherzustellen, daß ein einziger Prozessor (CPU) auf einmal den Zustand der Warteschlange (Q/PR/S) von auf ein Ereignis wartenden Prozessen modifizieren kann.

7.  System nach einem der Ansprüche 1 bis 6, dadurch gekennzeichnet, daß das oder die spezialisierten Module (CHSEL, DQSEL, EQSEL) dazu vorgesehen sind, den Aufruf des allgemeinen Moduls (CTSEL) auszuführen.

8.  System nach Anspruch 7, dadurch gekennzeichnet, daß es Mittel für den Dialog zwischen den Prozessoren, die gegebenenfalls von den mikroprogrammierten Mitteln verwendet werden, sowie Mittel (CP) eines Prozessors (CPU) zum Aussenden von Anforderungen (EXECi), die den anderen Prozessoren (CPUi) die Identität neuer auszuführender Prozesse (NJP) melden, enthält, daß den Dialogmitteln eine erste Dialogsperre (MPDL) zugeordnet ist, die von den mikroprogrammierten Mitteln (CP) verwendet wird, um sicherzustellen, daß ein einziger Prozessor (CPU) auf einmal die Anforderungen (EXECi) aussenden kann, und daß jedes spezialisierte Modul so beschaffen ist, daß es in dem Fall, in dem die Ausführung des spezialisierten Moduls (CHSEL, DQSEL, EQSEL) einen Dialog erfordert, während die Sperre (MPDL) gesetzt ist, seine Ausführung anhält und den Aufruf des allgemeinen Moduls (CTSEL) ausführt.

9.  System nach Anspruch 8, dadurch gekennzeichnet, daß die Dialogmittel einen Briefkasten (CPCB) enthalten, der jedem Prozessor (CPUi) zugeordnet ist und von den mikroprogrammierten Mitteln (CP) verwendet wird, um die Anforderungen (EXECi) zu übertragen, daß jedem Briefkasten (CPCB) eine Sperre (DCLK) zugeordnet ist, die von dem die Anforderungen (EXECi) sendenden Prozessor (CPU) in den gesetzten Zustand versetzt wird und von dem Prozessor (CPUi), dem der Briefkasten zugeordnet ist, nach der Ausführung der für ihn bestimmten Anforderung freigegeben wird, und daß jedes spezialisierte Modul so beschaffen ist, daß es in dem Fall, in dem die Ausführung des spezialisierten Moduls (CHSEL, DQSEL, EQSEL) das Schicken einer Anforderung (EXECi) an einen Prozessor (CPUi) erfordert, während die Sperre (DCLK) seines Briefkasten gesetzt ist, seine Ausführung anhält und den Aufruf des allgemeinen Moduls (CTSEL) ausführt.

10. System nach einem der Ansprüche 1 bis 9, dadurch gekennzeichnet, daß es einen Einschränkungsanzeiger (CST) enthält, dessen Zustand das Vorhandensein von Prozessen (JP) mit Einschränkungen im System, d. h. von Prozessen, deren Ausführung von bestimmten, besonderen Prozessoren (CPU) bewerkstelligt werden muß, angibt, und daß die mikroprogrammierten Mittel (CPU) so beschaffen sind, daß die Verteilung der Prozesse (JP) an die Prozessoren (CPU) durch das allgemeine Modul (CTSEL) bewerkstelligt wird, wenn der Anzeiger (CST) das Vorhandensein von Einschränkungen meldet.

FIG. 1

0                                                            31

PCB

| | | PRI | STATE | | | PMW 0 |
| | ADRESSE SEMAPHORE | | | | PMW 1, PMW 2 |
| | | | CPSM | | | PMW 3 |

ZONE REGISTRES

**FIG. 2**

CPCB

0                                                            31

| CPN | CPS | |
| CJP | | CPLD |

| DCLK | | |
| NJP | | NPLD |

**FIG. 3**

*PL*

| 0 | | 16 | 18 | | 24 | | 28 | 31 |
|---|---|---|---|---|---|---|---|---|
| NL | | R | D | | TEN | PRI | | |
| JP | | | | | | | | |

## FIG. 4

*SEM*

| 0 | 4 | | 16 | | 31 |
|---|---|---|---|---|---|
| STAG | SMC | | SCT | | |
| PQHP/MQHP | | | MQTP | | |

## FIG. 5

*ML*

| 0 | | 16 | | 24 | 28 | 31 |
|---|---|---|---|---|---|---|
| NL | | | | MPL | MTAG | |
| SENDER | | | | | | |
| MESSAGE | | | | | | |

## FIG. 6

*SCB*

| 0 | | | 31 |
|---|---|---|---|
| RDYLK | | | |
| | | CST | |
| MPDL | | | |
| SEMLK | | | |
| VLD-CPU-MSK | | | |
| IDLE-CPU-MSK | | | |
| | | | |
| | | | |

## FIG. 7

INSTRUTION P

1 — T&S SEMLK

2 — ACCES SEM
ANALYSE
MISE A JOUR

SCT> O ← | → SCT ≤ O

3 — SEMLK:=O

T&S RDYLK — 4

5 — DEPLACER CJP
DE Q/PR/RDY VERS Q/PR/S

FIN

SEMLK:=O — 6

=O ← 7 CST → ≠O

APPEL DQSEL

RDYLK:=O — 8

9 — ACCES Q/PR/RDY
ANALYSE
CHOIX DE NJP

APPEL CTSEL

10 — RDYLK:=O

=1 ← DCLK (CPU) → =O

APPEL CTSEL

11

DCLK:=1
D(NJP):=1 — 12

ECRIRE NJP
DANS CPCB(CPU) — 13

APPEL EXEC

FIG. 8

```
                    ┌──────────────────┐
                    │       EXEC       │
                    └──────────────────┘
                              ┊
                              ▼
       14        ┌───────────────────────────────┐
                 │        ACCES CPCB(CPUi)        │
                 └───────────────────────────────┘
                              │
                              ▼
       15        ┌───────────────────────────────┐
                 │         ACCES PCB (CJP)        │
                 │         SAUVEGARDE CJP         │
                 └───────────────────────────────┘
                              │
                              ▼
       16        ┌───────────────────────────────┐
                 │            T&S RDYLK           │
                 └───────────────────────────────┘
                              │
                              ▼
       17        ┌───────────────────────────────┐
                 │         ACCES Q/PR/ RDY        │
                 │            R(CJP):=O           │
                 │          ACCES PCB(CJP)        │
                 │      STATE:=PRET INACTIF       │
                 └───────────────────────────────┘
                              │
                              ▼
       18        ┌───────────────────────────────┐
                 │            RDYLK:=O            │
                 └───────────────────────────────┘
                              │
                              ▼
       19        ┌───────────────────────────────┐
                 │         ACCES PCB(NJP)         │
                 │         CHARGEMENT NJP         │
                 └───────────────────────────────┘
                              │
                              ▼
       20        ┌───────────────────────────────┐
                 │        ACCES CPCB(CPUi)        │
                 │            DCLKi:=O            │
                 └───────────────────────────────┘
                              │
                              ▼
       21        ┌───────────────────────────────┐
                 │            T&S RDYLK           │
                 └───────────────────────────────┘
                              │
                              ▼
       22        ┌───────────────────────────────┐
                 │         ACCES Q/PR/RDY         │
                 │            R(NJP):=l           │
                 │            D(NJP):=O           │
                 │         ACCES PCB (NJP)        │
                 │          STATE:=ACTIF          │
                 └───────────────────────────────┘
                              │
                              ▼
       23        ┌───────────────────────────────┐
                 │            RDYLK:=O            │
                 └───────────────────────────────┘
                              │
                              ▼
                    ┌──────────────────┐
                    │       FIN        │
                    └──────────────────┘
```

FIG. 9

FIG. 10

FIG. 11